Europäisches Patentamt

European Patent Office

Office européen des brevets

(11) Publication number: **0 604 903 A2**

# EUROPEAN PATENT APPLICATION

(21) Application number: **93120769.0**

(22) Date of filing: **23.12.93**

(51) Int. Cl.5: **G02F 1/1335**

(30) Priority: **25.12.92 JP 345927/92**

(43) Date of publication of application:
**06.07.94 Bulletin 94/27**

(84) Designated Contracting States:
**DE FR GB**

(71) Applicant: **MATSUSHITA ELECTRIC INDUSTRIAL CO. INC.**
**1006, Oaza Kadoma**
**Kadoma-Shi, Osaka(JP)**

(72) Inventor: **Yamagishi, Nobuyasu**
**Sanraifu A102, Nukaotomaru-Machi Ha-162**
**Kanazawa-Shi, Ishikawa 921(JP)**
Inventor: **Takubo, Yoneharu**
**2-21-10, Miyayama-Machi**
**Toyonaka-Shi, Osaka 560(JP)**
Inventor: **Satani, Hiroshi**
**Yamamoto-Mansions 302, 5-30,**
**Furukawa-Cho**
**Kadoma-Shi, Osaka 571(JP)**
Inventor: **Yamamoto, Makoto**
**3-9-13-1117, Higashi-Mikuni,**
**Yodogawa-ku**
**Osaka-Shi, Osaka 532(JP)**

(74) Representative: **Eisenführ, Speiser & Partner**
**Martinistrasse 24**
**D-28195 Bremen (DE)**

(54) **Liquid crystal display panel.**

(57) A liquid crystal panel used for a flat display can be produced at a high yield while scattering of hue and optical interference are vanished to realize a high quality display.

At each interface between adjacent layers (for example between a top substrate (1) and a color filter (8), or between a color filter (8) and an ITO film (4), or the like) the difference of the index of refraction is set to be 0.2 or less.

To that purpose an intermediate layer (12,13) may be inserted between two adjacent layers where the difference of the index of refraction is larger than 0.2.

Alternatively, if a layer has a difference of index of refraction larger than 0.2 with respect to an adjacent layer at either side thereof then its optical path "nd" is chosen to satisfy the relation $n d = N \frac{\lambda}{2}$

where $\lambda$ denotes a design wavelength, and N a positive integer.

Preferentially $\lambda = 550$ nm (green color wavelength).

Still alternatively, a minute rough surface of 0.01-0.5 $\mu$m may be formed at any interface where the difference of the index of refraction is larger than 0.2.

EP 0 604 903 A2

*Fig. 1*

## BACKGROUND OF THE INVENTION

### Field of the Invention

The present invention relates to a liquid crystal display panel used for a liquid crystal display device.

### Description of the Prior Art

Liquid crystal display panels are classified into active matrix type and passive matrix type from a point of view of driving liquid crystal. In general, in a liquid crystal display panel of both types, layers as many as ten or more including a liquid crystal layer are arranged between top and bottom substrates. For example, alignment films, color filters of red, green and blue for incident light, electrode layers such as pixel electrodes and a counter electrode and the like are layered between the two substrates.

Such a structure is very liable to cause optical interference because many layers are arranged within a short distance and the difference of index of refraction may be large between adjacent layers. For example, if an electrode layer made of indium-tin-oxide (ITO) of 1.5 of the index of refraction is formed on a substrate of $SiO_2$ made of 2.0 of the index of refraction, the difference of the index between the two layers is 0.5. If light transmits this panel, the light is reflected at the interface between the electrode layer and the substrate and this causes interference due to the phase difference of light.

A liquid crystal display panel has a high luminance generally, and a fluorescent lamp of three wavelengths type is used as a back light for a transmission type liquid crystal display device. The light-emission characteristic of a fluorescent lamp of three wavelengths type has sharp peaks in the spectra at three wavelengths in correspondence to blue, green and red. The light emitted by the fluorescent lamp is liable to cause interference. If the light is transmitted through a liquid crystal display panel wherein a large difference of the index exists between adjacent layers, hue may change due to optical interference caused by the difference of the thicknesses of the layers between the two substrates and by the difference of the liquid crystal layer. This not only deteriorates the display quality of the liquid crystal display device, but also worsens the yield of production of liquid crystal display panels.

## SUMMARY OF THE INVENTION

An object of the present invention is to provide a liquid crystal display panel of good quality of display.

Another object of the present invention is to provide a liquid crystal panel which can be produced with good yield.

In one aspect of the invention, between the two substrates of a liquid crystal display panel, all the differences of the index of refraction between adjacent layers at interfaces are set to be 0.2 or less. For example, the material of the layers included in a panel is selected so that the index of refraction thereof satisfies the above-mentioned condition or an intermediate layer is inserted between two layers wherein the difference of the index between the two layers are larger than 0.2. Thus, the reflection amplitude of light at the interfaces between layers is decreased due to the large difference of index of refraction, so that the intensity of interference light is decreased. Therefore, the display quality of a liquid crystal display panel can be improved and the yield can be increased.

In another aspect, among interfaces having the difference of index of refraction between two adjacent layers is more than 0.2 between top and bottom layers in a liquid crystal display panel, at least one of the interfaces has a minute unevenness or roughness. The rough surface has 0.01 - 0.5 $\mu$m of distance between peaks and the like of the unevenness which can scatter visible light.

In a still another aspect, even if a layer has two adjacent layers and has the differences of the index more than 0.2 between the central layer and an adjacent layer at the interfaces at both sides, the optical path length "nd" of the central layer is chosen to have a value of about a half of the wavelength of green or about a half times an integer larger than 0. Thus, the phase of the transmission light without reflection and the light reflected a plurality of times is reversed from each other in the layer to decrease the reflection intensity at the layer, and the intensity of interference light decreases. Therefore, the display quality of liquid crystal display panel can be improved and the yield can be increased. A similar structure can be adopted to a multi-layer comprising two or more adjacent layers wherein the difference of index of refraction between adjacent layers in the multi-layer is more than 0.2. That is, even if the multi-layer has two adjacent layers and has the differences more than 0.2 of the index of refraction between the multi-layer and an adjacent layer at the interfaces at both sides of the multi-layer, the optical path length "nd" of the multi-layer is chosen to have a value of about a half of the wavelength of green or about a half times an integer

EP 0 604 903 A2

larger than 0. Similar advantages to the above-mentioned case of a single layer can be obtained.

In a further aspect, a minute rough surface of 0.01 - 0.5 $\mu$m of the unevenness is formed at an interface between two substrates of a liquid crystal display panel. Such a rough surface may be formed at an interface having the difference of index of refraction between adjacent layers at the interface is more than 0.2. Such a rough surface may also be formed at a surface of a layer such as a transparent conductive layer for an electrode or a transparent insulating layer provided between the two substrates. The phase of light becomes random at the random surface, and the intensity of interference light can be decreased.

An advantage of the present invention is that the quality of display can be improved.

Another advantage of the present invention is that the yield of a liquid crystal display panel can be increased.

## BRIEF DESCRIPTION OF THE DRAWINGS

These and other objects and features of the present invention will become clear from the following description taken in conjunction with the preferred embodiments thereof with reference to the accompanying drawings, and in which:

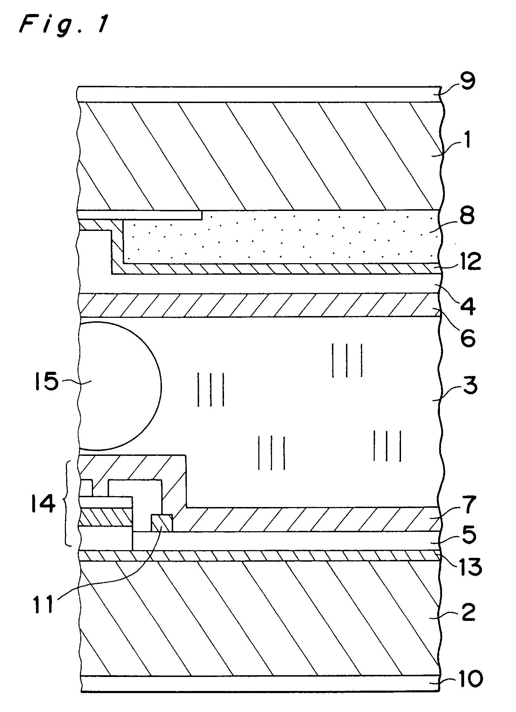

Fig. 1 is a schematic and sectional view of a part of a liquid crystal display panel of Embodiment 1;

Fig. 2 is a graph of a spectrum of the liquid crystal display panel;

Fig. 3 is a graph of light-emitting characteristic of a general fluorescent lamp of three wavelengths type;

Fig. 4 is a schematic and sectional view of a part of a comparison example of a liquid crystal display panel;

Fig. 5 is a graph of a spectrum of the liquid crystal display panel;

Fig. 6 is a schematic and sectional view of a part of a liquid crystal display panel of Embodiment 2;

Fig. 7 is a graph of a spectrum of the liquid crystal display panel;

Fig. 8 is a schematic and sectional view of a part of a liquid crystal display panel of Embodiment 3;

Fig. 9 is a graph of a spectrum of the liquid crystal display panel;

Fig. 10 is a schematic and sectional view of a part of a liquid crystal display panel of Embodiment 4;

Fig. 11 is a graph of a spectrum of the liquid crystal display panel;

Fig. 12 is a schematic and sectional view of a part of a liquid crystal display panel of Embodiment 5; and

Fig. 13 is a graph of a spectrum of the liquid crystal display panel.

## DETAILED DESCRIPTION OF THE PREFERRED EMBODIMENTS

Referring now to the drawings, wherein like reference characters designate like or corresponding parts throughout the several views, embodiments of the present invention will be explained in detail below.

In general, in a liquid crystal display panel of active matrix type, the difference of index of refraction of the order of 0.3 to 0.5 is liable to occur at one or more interfaces between the top and bottom substrates of the panel. In order to reduce the effect of such a large difference on display quality, it is desirable to decrease the difference to 0.2 or less. The normal incident reflectivity at an interface between two adjacent substances is expressed as follows:

$$R = ((n_1 - n_2)/(n_1 + n_2))^2,$$

wherein $n_1$ and $n_2$ denote the indices of refraction of the two substances. The index of refraction of substances to be used in a liquid crystal display is usually 1.5 - 2.0. If the intensity of light varies by about 0.3 %, the nonuniformity of light can be recognized with naked eyes. If $n_1 + n_2$ is taken 3.5 for example and $n_1 - n_2$ is taken to be 0.2,

$$R = (0.2/3.5)^2 = 0.00327 = 0.327\%.$$

Therefore, the reflection itself of light becomes small if $n_1 - n_2$ is taken to be 0.2, and it further decreases if $n_1 - n_2$ becomes less than 0.2. Then, the intensity of interference pattern due to multiple scattering becomes very weak and the quality of display is not deteriorated.

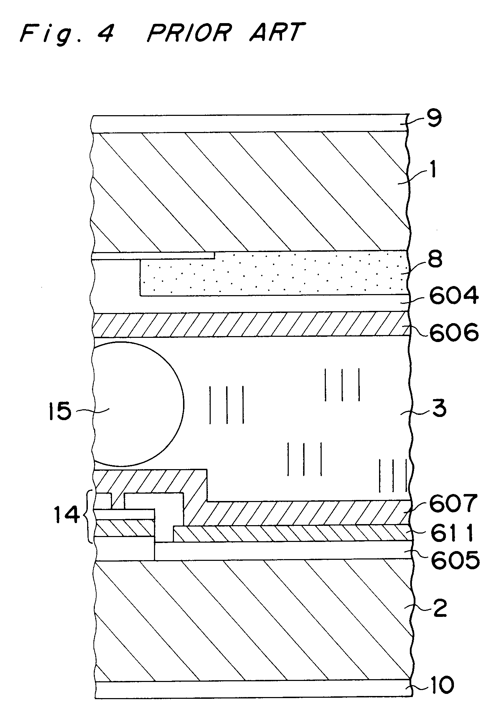

In Embodiment 1, the material of the layers included in a panel is selected so that the index of refraction thereof satisfies the above-mentioned condition on the difference of the index of 0.2 or less and an intermediate layer is inserted between two layers having the difference of the index between them more than 0.2. Fig. 4 shows a sectional schematic view of a liquid crystal display panel of active matrix type of Embodiment 1, while Table 1 shows the index of refraction and film thickness of each film provided

4

between glass substrates in a transmission part which affects the quality of display.

In this structure, micro-color-filters 8 are formed on a transparent top substrate 1 made of glass, and an intermediate layer 12 is formed on the color filters 8. Further, an indium tin oxide (ITO) film 4 as a counter electrode is formed on the color filters 8, while the index of refraction of the ITO film 4 is decreased to 1.9 by changing the deposition conditions. Next, an alignment film 6 made of a resin having 1.7 of high index of refraction is applied further to the ITO film 4. The intermediate layer 12 is provided between the color filters 8 and the ITO film 4 because the difference of the index of refraction between them is 0.4 which is larger than a desirable difference of 0.2 or less. The intermediate layers 12 is made of for example polyimide of 1.7 of index of refraction intermediate between those of the color filters 8 and the ITO film 4 and has a relatively high transmittance. By using the intermediate layer 12, the difference of the index of refraction is 0.2 at an interface between the color filters 8 and the intermediate layer 12 and it is also 0.2 at an interface between the intermediate layer 12 and the ITO film 4.

On the other hand, another intermediate layer 13 is formed on a transparent bottom substrate 2 made of glass. The intermediate layer 13 is also made of polyimide. Then, an ITO film 5 for pixel electrodes connected to thin film transistors, thin film transistors 14 and $SiN_x$ films 11 are formed on the intermediate layer 13. The index of refraction of the ITO film 5 is also decreased to 1.9 by changing the deposition conditions. The $SiN_x$ films 11 are not provided in the transmission part in this embodiment so as to make the ITO film 5 contact with an alignment film 7 there. $SiN_x$ films are also formed in the thin film transistors 14 to isolate the gate electrode from the source electrode though not explained in detail. The intermediate film 13 is provided between the bottom substrate ($SiO_2$) 2 and the ITO film 5 because the difference of the index of refraction between them is 0.4 which is larger than a desirable difference of 0.2 or less. Then, the alignment film 7 made of a resin having 1.7 of high index of refraction is formed on the ITO film 5 and the $SiN_x$ film 11. By using the intermediate layer 13, the difference of the index of refraction is 0.2 at an interface between the bottom substrate 2 and the intermediate layer 13 and 0.2 also at an interface between the intermediate layer 13 and the ITO film 5.

Table 1

| Liquid crystal display panel of Embodiment 1 | | |
|---|---|---|
| Kind of film | Index of refraction | Film thickness (nm) |
| Glass substrate 1 | 1.5 | $1.1*10^6$ |
| Color filter 8 | 1.5 | 1500 |
| Intermediate layer 12 | 1.7 | 40 |
| ITO film 4 | 1.9 | 50 |
| Alignment film 6 | 1.7 | 100 |
| Liquid crystal 3 | 1.5 | 5000 |
| Alignment film 7 | 1.7 | 100 |
| Intermediate film 13 | 1.9 | 80 |
| ITO film 5 | 1.7 | 40 |
| Glass substrate 2 | 1.5 | $1.1*10^6$ |

A liquid crystal layer 3 of about 5 $\mu$m of thickness is interposed between the top and bottom substrates 1, 2 by using beads 15 as spacers and sealed at the sides to form a liquid crystal cell. Further, polarizers 9 and 10 are provided at both sides of the liquid crystal cell.

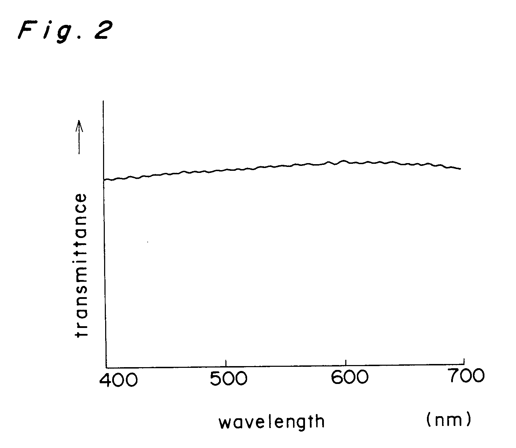

In the above-mentioned structure, all differences of the index of refraction at interfaces between the two glass substrates 1, 2 become 0.2 or less. Fig. 2 shows a graph of a spectrum of the liquid crystal display panel of Embodiment 1. The oscillation amplitude of the waveform of the spectrum has a small period of 10 - 15 nm, and this shows that the optical interference is not strong. When the light of a fluorescent lamp of three wavelengths type is used as a back light, the light is transmitted through the liquid crystal display panel.

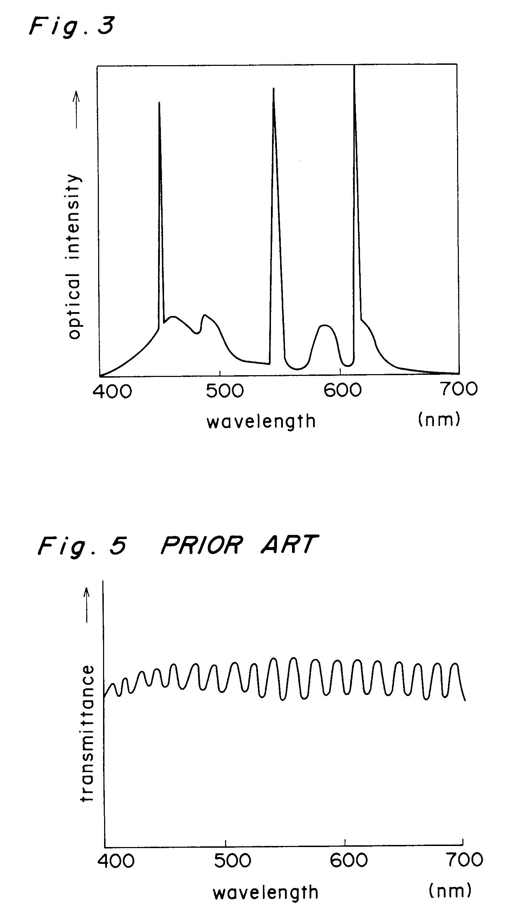

Fig. 3 shows the light-emission characteristic of a fluorescent lamp of three wavelengths type having good color rendering properties, wherein sharp emission line spectra of 10 nm or less of half width are observed at three wavelengths in correspondence to blue, green and red. If the light of the lamp is transmitted through a liquid crystal display panel made of multi-layer films having large differences of index of refraction between adjacent layers, hue may change due to optical interference caused by the difference of film thicknesses and by the difference of the thickness of the liquid crystal layer. However, no interference pattern and no change of hue are observed in the above-mentioned structure, That is, the quality of display of the liquid crystal display panel is good.

For comparison, a liquid crystal display panel of active matrix type shown in Fig. 4 is produced. In this structure, a common electrode made of micro-color-filters 8 and an indium tin oxide (ITO) film 604 is formed on a transparent top substrate 1 made of glass. Further, an alignment film 606 made of polyimide is applied further to the ITO film 604. On the other hand, ITO films 605 for pixel electrodes and thin film transistors 14 connected thereto are formed on a bottom substrate 2 and $SiN_x$ films 611 as transparent insulating films are formed on the ITO films 605. Then, an alignment film 607 made of a polyimide is formed on the $SiN_x$ films 611 and the thin film transistors 14. A liquid crystal layer 3 is interposed between two layers of the alignment films 6, 7.

Table 2

| Comparison example | | |
|---|---|---|
| Kind of film | Index of refraction | Film thickness (nm) |
| Glass substrate 1 | 1.5 | $1.1 * 10^6$ |
| Color filter 8 | 1.5 | 1500 |
| ITO film 604 | 2.0 | 50 |
| Alignment film 606 | 1.6 | 100 |
| Liquid crystal 3 | 1.5 | 5000 |
| Alignment film 607 | 1.6 | 100 |
| $SiN_x$ film 611 | 1.85 | 100 |
| ITO film 605 | 2.0 | 80 |
| Glass substrate 2 | 1.5 | $1.1*10^6$ |

Table 2 shows the index of refraction and film thickness of each film provided between the glass substrates 1, 2 in a transmission part which affects the quality of display.

This structure is very liable to cause optical interference because films of more than ten are provided in a short distance and the difference of index of refraction is large between adjacent films. In this comparison example, the ITO film 604 in the side of the top substrate 1 has differences of 0.5 and 0.4 of index of refraction at the two sides thereof. On the other hand, the differences of index of refraction are 0.5 and 0.35 at an interface between the $SiO_2$ film 2 and the ITO film 605 and at another interface between the $SiN_x$ film 611 as an transparent insulating film and the polyimide alignment film 607, respectively.

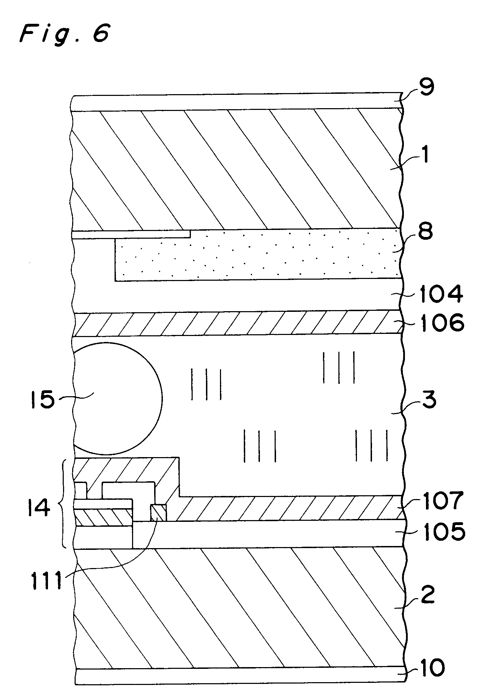

If light transmits this panel, the light is reflected at the above-mentioned two interfaces, so that interference due to the phase difference arises. Fig. 5 shows the spectral characteristic of the panel. A waveform having large oscillation amplitude of period of 10 - 15 $\mu$m is observed, and this shows the occurrence of interference. If this graph is compared with Fig. 2 of Embodiment 1, it is found that the latter has better quality than the comparison example.

Next, another solution to improve display quality is explained. Even if at least one layer between the two substrates of a liquid crystal display panel has the differences of the index of refraction at an interfaces with adjacent layers at both sides thereof more than 0.2, the optical path length "nd" of the layer can be chosen to have a value of about a half of the wavelength of green. Thus, the phase of the light transmitting the interface without reflection and that of light reflected at the interface one or more times is reversed to decrease the reflection intensity at the layer and to decrease the intensity of interference light. Therefore, the display quality of liquid crystal display panel can be improved and the yield can be increased.

The optical path length "nd" of a layer is chosen to satisfy the following relation (1):

$$(275*i + 50) \text{ nm} > nd > (275*i - 50) \text{ nm}, \qquad (1)$$

wherein "d" denotes the thickness of a layer, "n" denotes the index of refraction of the layer. Thus, "nd" denotes optical path length through the layer. In the relation (1), "i" denotes an integer between 1 and an appropriate upper limit such as 1000. If "i" is too large, "d" is too large not to cause optical interference. Therefore, the upper limit of "i" is taken as an appropriate value to cause optical interference.

This relation is explained below. If light having the same wavelength as optical path is reflected, the phase of the reflected light is reversed. Therefore, the reflected light cancels the incident light at the front or back plane thereof so that the intensity of the reflected light itself becomes small. In general, a wavelength

6

which can be recognized most easily with naked eyes is about 550 nm. Then, if the optical path length "nd" is determined for the wavelength of green, say nd = 550 nm, the reflection of light can be suppressed in such a wavelength range which can be recognized most easily even if the reflection at an interface is large or $n_2 - n_1 > 0.2$ where $n_1$ and $n_2$ denote indices of refraction of adjacent layers at the interface. Though "nd" changes actually due to scattering of index of refraction "n" and to that of film thickness "d", if "nd" is taken between 500 and 600 nm or a prescribed wavelength range around green, the reflection of light in such a wavelength range which can be recognized most easily can be suppressed. This condition is expressed by the following relation:

(550 + 50) nm > nd > (550 - 50) nm.     (2)

The phase of the reflected light agrees with that of the incident light at the front or back plane thereof at each half wavelength. Thus, the above-mentioned relation is rewritten to give the above-mentioned relation (1).

Next, a liquid crystal display panel of Embodiment 2 of the invention will be explained in detail. Fig. 6 shows a schematic and sectional view of a liquid crystal display panel of Embodiment 2, while Table 3 shows the index of refraction and film thickness of each film in the liquid crystal display panel.

The structure of this liquid crystal display panel is similar to that of Embodiment 1 shown in Fig. 4, except that the intermediate layers 12 and 13 are not formed. In this structure, a common electrode made of color filters 8 and an indium tin oxide (ITO) film 104 is formed on a transparent top substrate 1 made of glass. Further, an alignment film 106 made of polyimide is applied further to the ITO film 104. On the other hand, ITO films 105 for pixel electrodes connected to thin film transistors are formed on the thin film transistors 14 and $SiN_x$ films 111 are formed on a bottom substrate 2. The $SiN_x$ films 111 are not provided in the transmission part so as to make the ITO films 105 contact with an alignment film 107 there. Then, the alignment film 107 made of a polyimide is formed on the ITO films 105 and the thin film transistors 14. A liquid crystal layer 3 is interposed between two layers of the alignment films 106, 107. That is, the ITO film 104 is formed directly on the color filters 8 and on the top substrate 1, while the ITO film 105 is formed directly on the bottom substrate 2.

The difference of the index of refraction is 0.5 at an interface between the bottom substrate 2 and the ITO film 105 and it is also 0.5 at an interface between the top substrate 1 and the ITO film 104 formed on the top substrate 1 in non-transmission part. Then, the film thicknesses "d" of the ITO films 104, 105 for the top and bottom substrates 1, 2 are set to be 140 nm, so that optical path length "nd" becomes 280 nm because the index "n" of refraction of the ITO films is 2.0. Thus, the above-mentioned relation (1) holds for the two ITO films 104, 105 if "i" is taken to be 1.

Table 3

| Liquid crystal display panel of Embodiment 2 | | |
| --- | --- | --- |
| Kind of film | Index of refraction | Film thickness (nm) |
| Glass substrate 1 | 1.5 | $1.1 * 10^6$ |
| Color filter 8 | 1.5 | 1500 |
| ITO film 104 | 2.0 | 140 |
| Alignment film 106 | 1.6 | 100 |
| Liquid crystal 3 | 1.5 | 5000 |
| Alignment film 107 | 1.6 | 100 |
| ITO film 105 | 2.0 | 140 |
| Glass substrate 2 | 1.5 | $1.1*10^6$ |

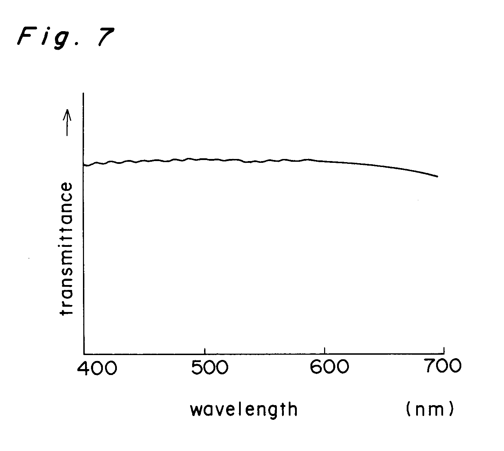

Fig. 7 shows a graph of a spectrum of the liquid crystal display panel of Embodiment 2. The oscillation amplitude of the waveform of 10 - 15 nm of period is small, compared with Fig. 2, and this shows that the optical interference is not strong. When the back light of a fluorescent lamp of three wavelengths type is transmitted through the liquid crystal display panel, no interference pattern and no change of hue are observed. That is, the quality of display is good.

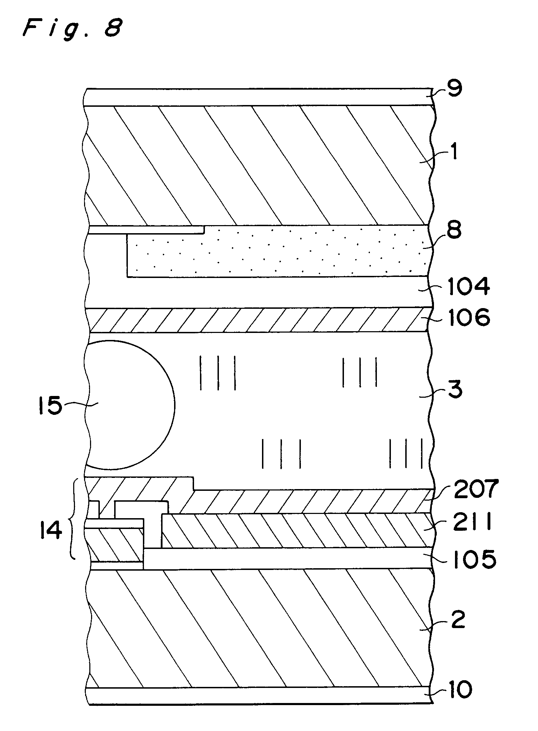

Next, a different solution to improve display quality is explained. As explained above in Embodiment 2, the optical path length "nd" of a single layer is determined to have a half or the like of the wavelength of green, to suppress the reflection of light in a wavelength range which can be recognized most easily even if

EP 0 604 903 A2

the reflection at an interface is large. However, this concept can be applied not only to a single layer, but also to a multi-layer made of a plurality of adjacent layers. A liquid crystal display panel of Embodiment 3 of the invention shows one of such cases. Fig. 8 shows a sectional view of a liquid crystal display panel of Embodiment 3, while Table 4 shows the index of refraction and film thickness of each film in the liquid crystal display panel.

This liquid crystal display panel is similar to that of Embodiment 2 shown in Fig. 5 mainly except that a $SiN_x$ film 211 as a transparent insulating film is formed on the ITO film 605 in the transmission part of the panel. That is, indium-tin-oxide (ITO) films 105 and thin film transistors 14 are formed on a bottom substrate 2, and $SiN_x$ films 211 as transparent insulating films are formed on the ITO films 105 to prevent the short circuit with the ITO film 104 for the top substrate 1. Then, an alignment film 207 is formed on the $SiN_x$ films 211 and thin film transistors 14. The film thickness "d" of the ITO film 105 for the bottom substrate 2 having 2.0 of index of refraction is set to be 140 nm, while that of the adjacent $SiN_x$ film 211 having 1.85 of index of refraction is set to be 190 nm. Thus, the total optical path length "nd" of a multi-layer consisting of the ITO films 105 and the $SiN_x$ films 211, or the sum of the optical path length of the two layers 105, 211, becomes 551.5 nm. Thus, the relation (1) when "i" = 2 is satisfied. If the structure of the $SiN_x$ films 211 is compared with that of $SiN_x$ films 111 shown in Fig. 6, the former $SiN_x$ layer 211 can also be taken as an intermediate layer introduced in Embodiment 1. Further, as already explained above in Embodiment 2, the film thickness "d" of the ITO film 104 for the top substrate 1 is set to be 140 nm, so that optical path length "nd" of the layer 104 becomes 280 nm because the index "n" of refraction of the ITO films is 2.0. Thus, the relation (1) when "i" = 1 is satisfied.

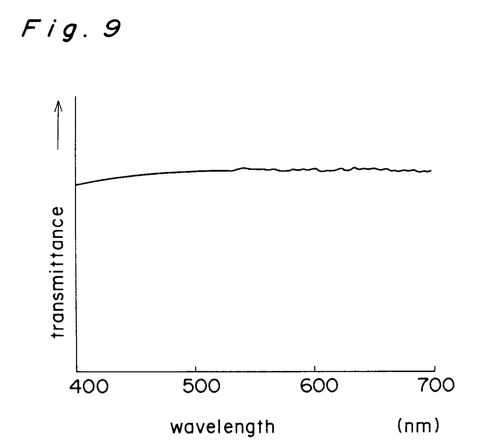

Fig. 9 shows a graph of a spectrum of the liquid crystal display panel. The oscillation amplitude of the waveform has 10 - 15 nm of small period, and this shows that the optical interference is not so strong. When the light of a fluorescent lamp of three wavelengths type as a back light is transmitted through the liquid crystal display panel, no interference pattern and no change of hue are observed. Thus, the quality of display is good.

Table 4

| Liquid crystal display panel of Embodiment 3 | | |
|---|---|---|
| Kind of film | Index of refraction | Film thickness (nm) |
| Glass substrate 1 | 1.5 | $1.1 * 10^6$ |
| Color filter 8 | 1.5 | 1500 |
| ITO film 104 | 2.0 | 140 |
| Alignment film 106 | 1.6 | 100 |
| Liquid crystal 3 | 1.5 | 5000 |
| Alignment film 207 | 1.6 | 100 |
| $SiN_x$ 211 | 1.85 | 190 |
| ITO film 105 | 2.0 | 100 |
| Glass substrate 2 | 1.5 | $1.1*10^6$ |

Next, a different solution to improve display quality is explained. In a different point view for improving display quality, if interfaces have the difference of indices of refraction between adjacent layers at the interfaces is more than 0.2, a minute rough surface of 0.01 - 0.5 $\mu$m of unevenness is formed at one of the interfaces. The light is scattered at the rough surface so that the phase of light becomes random. Thus, the intensity of interference light can be decreased. Therefore, the display quality of liquid crystal display panel can be improved and the yield can be increased. Because the wavelength of visible light ranges from 0.38 $\mu$m to 0.78 $\mu$m, the unevenness at the interface is suitable to be 0.01 - 0.5 $\mu$m in order to diffuse, scatter or refract visible light. That is, the distance between peaks or between bottoms of the uneven surface at the interface is preferably to be 0.01 - 0.5 $\mu$m as mentioned above.

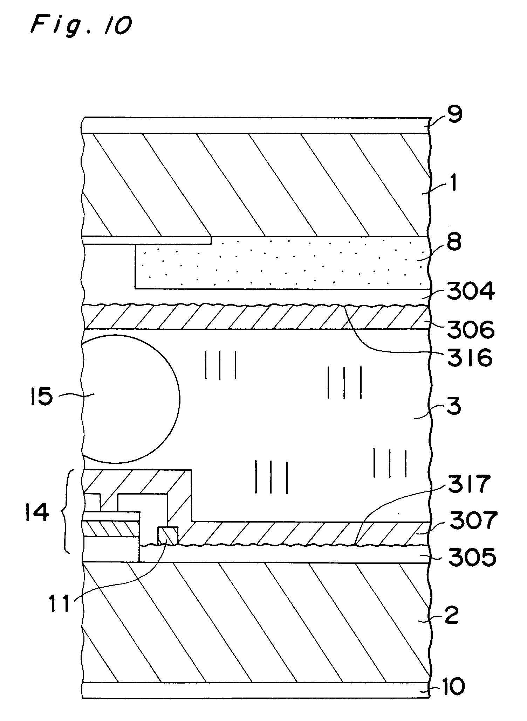

A liquid crystal display panel of Embodiment 4 of the invention will be explained in detail. Fig. 10 shows a sectional view of a liquid crystal display panel of Embodiment 4, while Table 5 shows the index of refraction and film thickness of each film in the liquid crystal display panel. The structure of the liquid crystal display panel is similar to that of Embodiment 2 mainly except rough interfaces 316, 317. $SiN_x$ films 11 are not formed over a bottom substrate 2 in a transmission part. Unevenness of about 0.1 $\mu$m is formed at the interface 317 between an ITO film 305 and an alignment film 307 and similar unevenness of about 0.1 $\mu$m is formed at the interface 316 between an ITO film 304 and an alignment film 306. The unevenness

8

can be formed by controlling the crystal growth conditions of ITO films 304, 305 to increase the sizes of crystal grains of the ITO films. It can also be formed by etching the surface of the ITO films slightly or by using a technique such as shot peening.

Table 5

| Liquid crystal display panel of Embodiment 4 | | |
| --- | --- | --- |
| Kind of film | Index of refraction | Film thickness (nm) |
| Glass substrate 1 | 1.5 | $1.1 * 10^6$ |
| Color filter 8 | 1.5 | 1500 |
| ITO film 304 | 2.0 | 140 |
| Alignment film 306 | 1.6 | 100 |
| Liquid crystal 3 | 1.5 | 5000 |
| Alignment film 307 | 1.6 | 100 |
| ITO film 305 | 2.0 | 100 |
| Glass substrate 2 | 1.5 | $1.1*10^6$ |

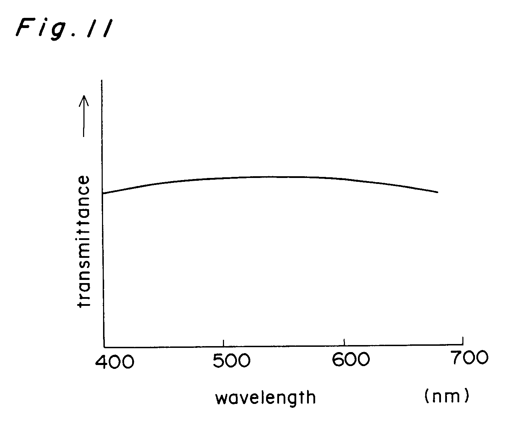

Fig. 11 shows a graph of a spectrum of the liquid crystal display panel of Embodiment 4. The oscillation amplitude of the waveform has a very small period of 10 - 15 nm, and this shows that the optical interference is not so strong. When the light of a fluorescent lamp of three wavelengths type as a back light is transmitted through the liquid crystal display panel, no interference pattern and no change of hue are observed and the quality of display is good when the liquid crystal display panel is observed both in a direction normal to the surface and in an oblique direction. Though the rough surfaces are formed over top and bottom substrates in this panel, it may be formed over only one of the two substrates. A similar good result can be obtained.

Table 6

| Liquid crystal display panel of Embodiment 4 | | |
| --- | --- | --- |
| Kind of film | Index of refraction | Film thickness (nm) |
| Glass substrate 1 | 1.5 | $1.1 * 10^6$ |
| Color filter 8 | 1.5 | 1500 |
| ITO film 404 | 2.0 | 50 |
| Alignment film 406 | 1.6 | 100 |
| Liquid crystal 3 | 1.5 | 5000 |
| Alignment film 407 | 1.6 | 100 |
| $SiN_x$ 411 | 1.85 | 100 |
| ITO film 405 | 2.0 | 80 |
| Glass substrate 2 | 1.5 | $1.1*10^6$ |

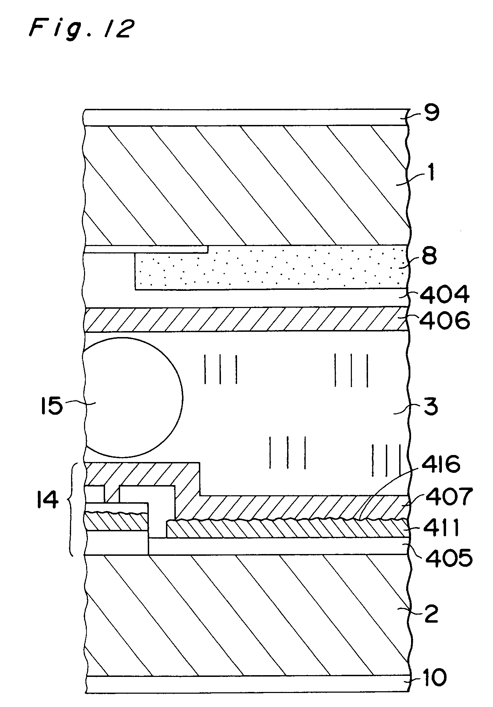

Further, a different solution to improve display quality is explained. In a different point view for improving display quality, a minute uneven surface of 0.01 - 0.5 $\mu$m of unevenness formed in Embodiment 4 can also be formed at a surface of one of the layers provided between the top and bottom substrates. Fig. 12 shows a sectional view of a liquid crystal display panel of Embodiment 5, while Table 6 shows the index of refraction and film thickness of each film in the liquid crystal display panel. The liquid crystal display panel has a structure similar to that of Embodiment 2 (Fig. 6) mainly except that unevenness of about 0.1 $\mu$m is formed with shot peening on a top surface 416 of $SiN_x$ films 411 as a transparent insulating film for a bottom substrate 2 and an alignment film 407 of polyimide is applied to it to be set thermally.

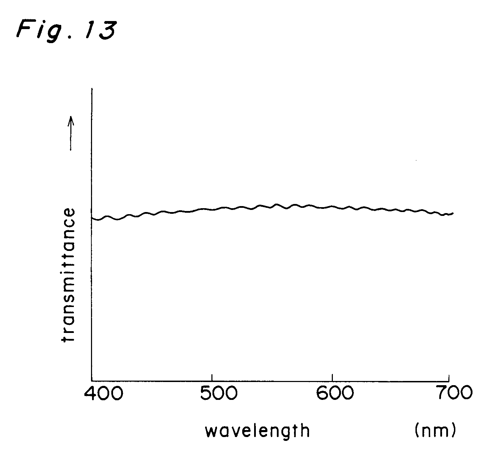

Fig. 13 shows a graph of a spectrum of the liquid crystal display panel of Embodiment 5. The oscillation amplitude of the waveform has a small period of 10 - 15 nm, and this shows that the optical interference is not so strong. When the light of a fluorescent lamp of three wavelengths type as a back light is transmitted through the liquid crystal display panel, no interference pattern and no change of hue are observed. The quality of display is good when the liquid crystal display panel is observed both in a direction normal to the surface and in an oblique direction.

Though a rough surface is provided at the top surface of the $SiN_x$ films 411 in Embodiment 5, such a rough surface can also be provided at a different layer such as an electrode film (ITO film). Then, an alignment film can be formed on the rough surface.

Though the above-mentioned embodiments relate to active matrix type liquid crystal display panels, this invention can also be applied to a liquid crystal display panel of passive matrix type.

As explained above, this invention decreases the effect of the large difference of the index of refraction between adjacent films by decreasing the difference, by optimizing the film thickness or the index of refraction or by providing a rough interface. Thus, a change of hue due to the difference of the thicknesses of a film and of the liquid crystal layer can be suppressed, and an interference pattern due to the films and liquid crystal layer can be vanished. Then, a liquid crystal display panel of high quality can be produced at a high yield.

Although the present invention has been fully described in connection with the preferred embodiments thereof with reference to the accompanying drawings, it is to be noted that various changes and modifications are apparent to those skilled in the art. Such changes and modifications are to be understood as included within the scope of the present invention as defined by the appended claims unless they depart therefrom.

## Claims

1. A liquid crystal display panel comprising first and second substrates, a liquid crystal layer interposed between the first and second substrates, an alignment film for aligning liquid crystal, a first electrode layer and a second electrode layer both for applying electric field to the liquid crystal layer, the two substrates and the layers being layered continuously between the two substrates;

   wherein the indices of refraction of the layers arranged between the two substrates have values so that the difference of the index of refraction between adjacent two layers among the layers is set to have 0.2 or less.

2. The liquid crystal display panel according to Claim 1, further comprising an intermediate layer inserted between two layers having the difference of the index of refraction larger than 0.2 between them so that the difference of the index of refraction is 0.2 or less between the intermediate layer and either of the two layers.

3. A liquid crystal display panel comprising first and second substrates, a liquid crystal layer interposed between first and second substrates, an alignment film for aligning liquid crystal, a first electrode layer and a second electrode layer both for applying electric field to the liquid crystal layer, the two substrates and the layers being layered continuously between the two substrates;

   wherein the index "n" of refraction of a layer arranged between the first and second substrates has a value so that the difference of the index of refraction between the layer and either of the two adjacent layers thereof is larger than 0.2 and the thickness "d" of the layer has a value so that the optical path length "nd" of the layer is equal to a half or a plurality of times thereof of a wavelength in a prescribed wavelength range in visible range.

4. The liquid crystal display panel according to Claim 3, wherein said prescribed range is selected around the wavelength of green.

5. The liquid crystal display panel according to Claim 4, wherein the optical path length "nd" satisfies the following relation:

   (275*i + 50) nm > nd > (275*i - 50) nm,

   wherein "i" is a positive integer.

6. A liquid crystal display panel comprising first and second substrates, a liquid crystal layer interposed between first and second substrates, an alignment film for aligning liquid crystal, a first electrode layer and a second electrode layer both for applying electric field to the liquid crystal layer, the two substrates and the layers being layered continuously between the two substrates;

   wherein the index "n" of refraction of a first layer arranged between the first and second substrates has a value so that the difference of the index of refraction between the layer and one of the two adjacent layers thereof is larger than 0.2, the index "n" of refraction of a second layer arranged between the first and second substrates has a value so that the difference of the index of refraction between the layer and one of the two adjacent layers thereof is larger than 0.2, the index "n" of refraction of a layer among adjacent layers arranged between the first and second layers has a value so that the difference of the index of refraction between the layer and either of the two adjacent layers thereof is 0.2 or less, and the thicknesses "d" of the first and second layers and the layer arranged between them have values so that a sum of the optical path lengths "nd" of layers arranged between the first and second layers is equal to a half or a plurality of times thereof of a wavelength in a prescribed wavelength range in visible range.

7. The liquid crystal display panel according to Claim 6, wherein said prescribed range is selected around the wavelength of green.

8. The liquid crystal display panel according to Claim 7, wherein the sum of the optical path lengths "nd" satisfies the following relation:

(275*i + 50) nm > nd > (275*i - 50) nm,

wherein "i" is a positive integer.

9. A liquid crystal display panel comprising first and second substrates, a liquid crystal layer interposed between first and second substrates, an alignment film for aligning liquid crystal, a first electrode layer and a second electrode layer both for applying electric field to the liquid crystal layer, the two substrates and the layers being layered continuously between the two substrates;
   wherein at least one interface arranged between the first and second layers has a rough surface of 0.01 - 0.5 $\mu$m of the unevenness.

10. The liquid crystal display panel according to Claim 9, wherein the interface having a rough surface is composed of two adjacent layers having the difference of index of refraction larger than 0.2 between them.

11. The liquid crystal display panel according to Claim 9, wherein the interface having a rough surface is composed of one of said electrode layers made of a transparent conductive film and an alignment film applied to the electrode layer.

12. The liquid crystal display panel according to Claim 9, wherein the interface having a rough surface is composed of a transparent insulating layer formed on one of said electrode layers and said alignment film applied to the transparent insulating layer.

11

*Fig. 1*

*Fig. 2*

*Fig. 3*

optical intensity →

wavelength (nm)

400    500    600    700

*Fig. 5    PRIOR ART*

transmittance →

wavelength (nm)

400    500    600    700

*Fig. 4  PRIOR ART*

*Fig. 6*

# *Fig. 7*

Fig. 8

# Fig. 9

Fig. 10

*Fig. 11*

*Fig. 12*

*Fig. 13*